(19) Europäisches Patentamt

European Patent Office

Office européen des brevets

(11) **EP 1 072 804 A2**

(12) **EUROPEAN PATENT APPLICATION**

(43) Date of publication:
31.01.2001 Bulletin 2001/05

(51) Int. Cl.⁷: **F16C 32/04**, F16C 39/04

(21) Application number: 00306103.3

(22) Date of filing: 18.07.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 26.07.1999 JP 21096799

(71) Applicant:
**SEIKO SEIKI KABUSHIKI KAISHA**
**Narashino-shi Chiba (JP)**

(72) Inventors:
• **Shi, Yongwei,**
c/o Seiko Seiki K.K.
**Narashino-shi, Chiba (JP)**
• **Otachi, Yoshinobu,**
c/o Seiko Seiki K.K.
**Narashino-shi, Chiba (JP)**

(74) Representative:
**Sturt, Clifford Mark et al**
**Miller Sturt Kenyon**
**9 John Street**
**London WC1N 2ES (GB)**

(54) **Magnetic bearing device**

(57) To provide a magnetic bearing device capable of obtaining a sufficient force to control a rotating member through the entire frequency range, capable of preventing touchdown, smaller in size, and having lower power consumption. Grooves are formed in the inner surface of a stator defining a hole for a shaft. Also, grooves are formed in an upper surface of a projecting portion facing a disk fixed to one end of the shaft. As the shaft rotates, dynamic pressure of air is produced between the shaft and the stator hole surface and between the bottom surface of the disk and the upper surface of the projecting portion. If the stiffness for position adjustment with electromagnets becomes lower in a frequency range (e.g., about a resonance point) in which the gain of transfer function G(s) decreases, this dynamic air pressure acts to compensate for deficiencies of the magnetic attractions of the electromagnets. Sufficiently large control forces are thereby obtained.

FIG.1

EP 1 072 804 A2

**Description**

The present invention relates generally to a magnetic bearing device and, more particularly, to a magnetic bearing device capable of obtaining a sufficient force to control a rotating member through the entire frequency range, capable of preventing touchdown, smaller in size, and having lower power consumption.

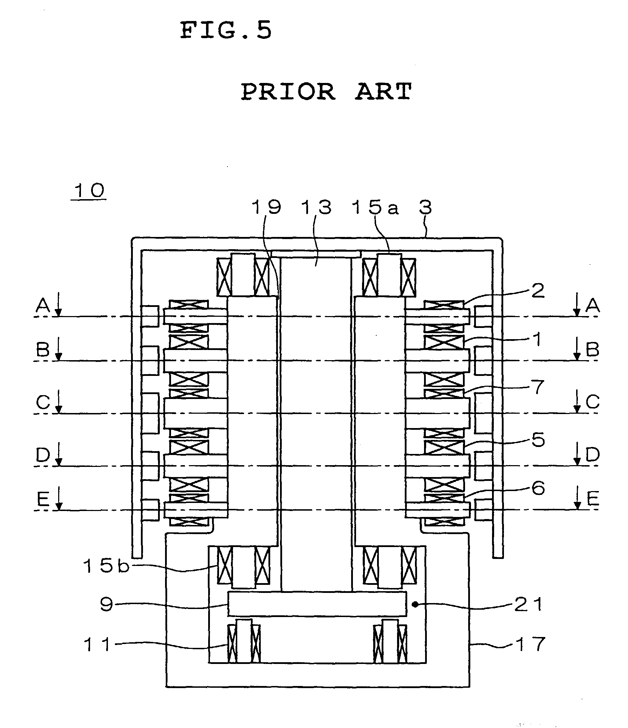

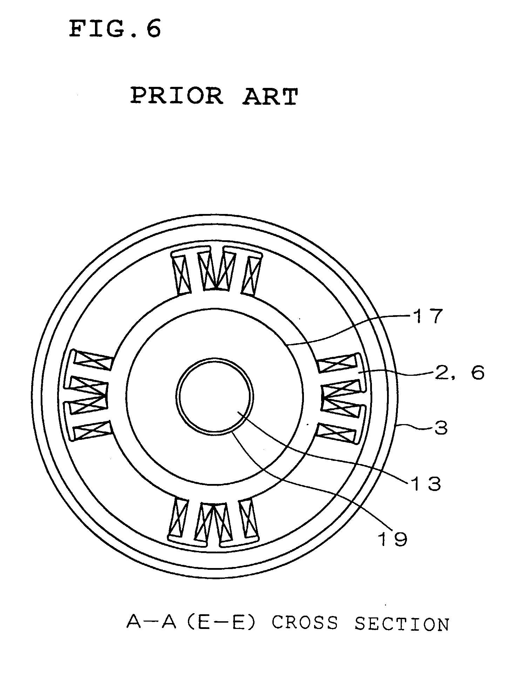

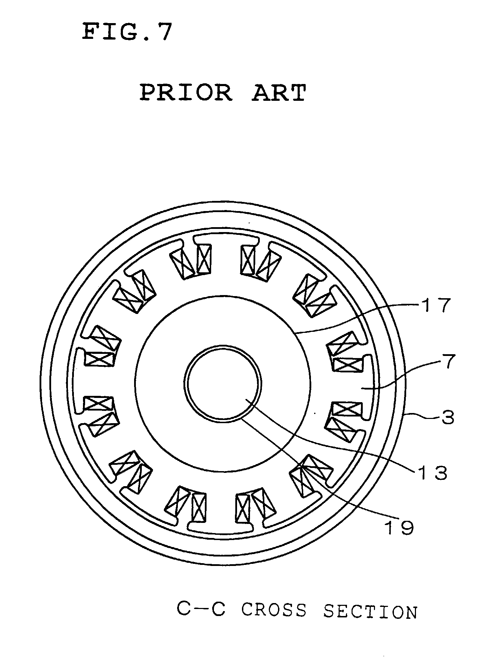

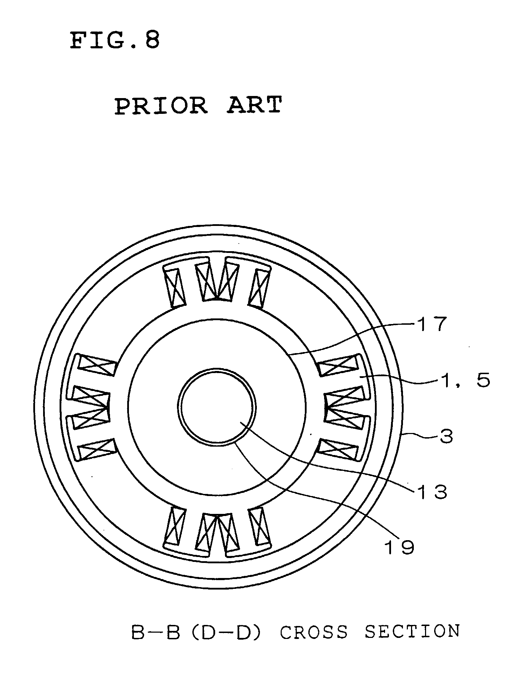

Fig. 5 illustrates a conventional (outer rotor type) magnetic bearing device 10 in which five axes control is performed. Fig. 6 is a cross-sectional view taken along each of the lines A-A and E-E of Fig. 5, Fig. 7 is a cross-sectional view taken along the line C-C of Fig. 5, and Fig. 8 is a cross-sectional view taken along each of the lines B-B and D-D of Fig. 5.

Referring to Figs. 5, 6, and 8, an upper radial electromagnet 1 is capable of adjusting the position in the radial direction (hereinafter referred to simply as "radial position") of an upper portion of an outer rotor 3 with an adjustment meter or the like (not shown in the figures) based on a radial position in an X-axis direction and a Y-axis direction detected by an upper radial position detection sensor 2. On the other hand, a lower radial electromagnet 5 is capable of adjusting the radial position of a lower portion of the outer rotor 3 with an adjustment meter or the like (not shown) based on a radial position in an X-axis direction and a Y-axis direction detected by a lower radial position detection sensor 6.

Referring to Figs. 5 and 7, a motor 7 is provided between the upper radial electromagnet 1 and the lower radial electromagnet 5 to rotate the outer rotor 3 at a high speed. A shaft 13 is provided at the center of the outer rotor 3. The shaft 13 penetrates a hole 19 formed in a central portion of a stator 17. A disk 9 is fixed to the lower end of the shaft 13 and is accommodated in a disk chamber 21 formed in a bottom portion of the stator 17.

The position in the axial direction (hereinafter referred to simply as "axial position") of the disk 9 is detected by an axial position sensor 11 mounted in a bottom section of the disk chamber 21. The axial position of the outer rotor 3 is adjusted through an adjustment meter or the like (not shown) by balancing attractions of axial electromagnets 15a and 15b.

The axial electromagnet 15a attracts the outer rotor 3 downward, while the axial electromagnet 15b attracts the disk 9 upward. The axial electromagnet 15a is provided on the upper end of the stator 17, and the axial electromagnet 15b is provided in an upper section of the disk chamber 21.

The conventional magnetic bearing device 10, however, has only a magnetic bearing as a bearing for the operation in the normal state and, therefore, has a problem described below.

In the magnetic bearing device 10, a transfer function G(s) defined by the following equation 1 for the relationship between the position P(t) of the outer rotor 3 and force F(t) for moving the outer rotor 3 to a target position (hereinafter referred to as "control force") has a frequency characteristic such that the gain decreases in a particular frequency range, such as a range about a resonance point.

$$G(s) = F(s)/P(s) \text{ (where s is a Laplacian operator)} \tag{1}$$

For this reason, sufficiently large control force cannot be obtained at a rotational speed at which a position change in such a range is caused by, for example, a force generated due to misalignment between the center of rotation and the centroid of the outer rotor 3. In such a situation, whirl of the outer rotor 3 may become larger.

Conventionally, to cope with this problem, it is necessary to increase the size and power consumption of each electromagnet so as to obtain necessary control force for limiting the magnitude of whirl to a predetermined value with respect to the above-mentioned range in which the gain decreases. As a result, the overall size and power consumption of the magnetic bearing device 10 are increased.

The present invention has been made in view of the above-described problem of the conventional art, and an object of the present invention is therefore to provide a magnetic bearing device capable of obtaining a sufficient force to control a rotating member through the entire frequency range, capable of preventing touchdown, smaller in size, and having lower power consumption.

To achieve this object, according to the present invention, there is provided a magnetic bearing device comprising: a rotating member; magnetic bearing means for supporting the rotating member by magnetic force, and for adjusting the radial position and/or the axial position of the rotating member; a stator on which the magnetic bearing means is fixed; and dynamic fluid pressure generation means for reinforcing the control force of the magnetic bearing in a compensating manner by dynamic fluid pressure produced in a small clearance formed between the stator and the rotating member as the rotating member rotates.

The rotating member comprises an inner rotor type and an outer rotor type. The magnetic bearing means supports the rotating member by magnetic force, and adjusts the radial position and/or the axial position of the rotating member. That is, the magnetic bearing means may adjust only the radial position or the axial position of the rotating member or may adjust both the radial and axial positions. The magnetic bearing means may have any number of control axes. For example, it may be of a three axes control type or a five axes control type.

The magnetic bearing means is fixed on the stator. The dynamic fluid pressure generation means has a small clearance formed between the stator and the rotating member. As the rotating member rotates, the control force of the magnetic bearing is reinforced in a compensating manner by dynamic fluid pressure produced in the clearance between the stator and the rotating member.

The magnetic bearing means has lower stiffness about a resonance point and becomes susceptible to turbulence. The dynamic fluid pressure generation means is provided to compensate for such a condition by a dynamic fluid pressure produced in the clearance between the stator and the rotating member. Therefore, the rotating member can rotate with improved stiffness through the entire frequency range.

In the case where only the dynamic fluid pressure generation means is provided, touchdown of the rotating member onto the stator occurs at the time of starting, stopping, etc., of the rotating member. In such a situation, there is a risk of damage to the rotor or stator.

However, the magnetic bearing means is provided to enable the rotating member to be supported always stably in a non-contact manner by being floated by magnetic force, thereby preventing touchdown at the time of starting, stopping, etc.

In the above-described arrangement, the magnetic bearing means and the dynamic air pressure generation means mutually offset their shortcomings to enable stable control of the rotating member.

The magnetic bearing device according to the present invention is characterized in that the rotating member has an outer rotor and a shaft provided at the center of the outer rotor, and in that the stator has a hole formed therein, the shaft being passed through the hole with a small clearance formed between the stator and the shaft in the hole, and the dynamic fluid pressure generation means has grooves for generating dynamic air pressure, the grooves being formed partially or entirely in the inner surface of the stator defining the hole and facing the shaft and/or in the cylindrical surface of the shaft.

The rotating member is of an outer rotor type. The shaft is provided at the center of the outer rotor. Through the hole formed in the stator, the shaft is passed with a small clearance. Grooves for generating dynamic air pressure are formed partially or entirely in the inner surface of the stator defining the hole and facing the shaft, and/or in the cylindrical surface of the shaft.

If the stiffness of the magnetic bearing means in the radial direction becomes lower, the force of the magnetic bearing means for adjustment in the radial direction can be reinforced in a compensating manner by dynamic air pressure produced in the gap between the stator and the shaft.

Further, the magnetic bearing device according to the present invention is characterized in that the rotating member has an outer rotor, a shaft provided at the center of the outer rotor, and a disk provided on a lower portion of the shaft, and in that disk bottom surface facing means is provided in a bottom portion of the stator by being slightly spaced apart form the disk so as to face a bottom surface of the disk with a predetermined clearance formed therebetween, and the dynamic fluid pressure generation means has grooves for generating dynamic air pressure, the grooves being formed partially or entirely in an upper surface of the disk bottom surface facing means and/or in the bottom surface of the disk.

The rotating member is of an outer rotor type. The shaft is provided at the center of the outer rotor, and the disk is provided on a lower portion of the shaft. The disk bottom surface facing means is provided in a bottom portion of the stator by being slightly spaced apart form the disk so as to face the bottom surface of the disk with a predetermined clearance formed therebetween. Grooves for generating dynamic air pressure are formed partially or entirely in the upper surface of the disk bottom surface facing means and/or in the bottom surface of the disk.

If the stiffness of the magnetic bearing means in the axial direction becomes lower, the force of the magnetic bearing means for adjustment in the axial direction can be reinforced in a compensating manner by dynamic air pressure produced in the clearance between the upper surface of the disk bottom surface facing means and the bottom surface of the disk.

Embodiments of the present invention will now be described by way of further example only and with reference to the accompanying drawings, in which:-

Fig. 1 is a longitudinal sectional view of an embodiment of the present invention;
Fig. 2 is a cross-sectional view taken along each of the lines F-F and J-J of Fig. 1;
Fig. 3 is a cross-sectional view taken along the line H-H of Fig. 1;
Fig. 4 is a cross-sectional view taken along each of the lines G-G and I-I of Fig. 1;
Fig. 5 is a diagram showing an example of a conventional (outer rotor type) magnetic bearing device in which five axes control is performed;
Fig. 6 is a cross-sectional view taken along each of the lines A-A and E-E of Fig. 5;
Fig. 7 is a cross-sectional view taken along the line C-C of Fig. 5; and
Fig. 8 is a cross-sectional view taken along each of the lines B-B and D-D of Fig. 5.

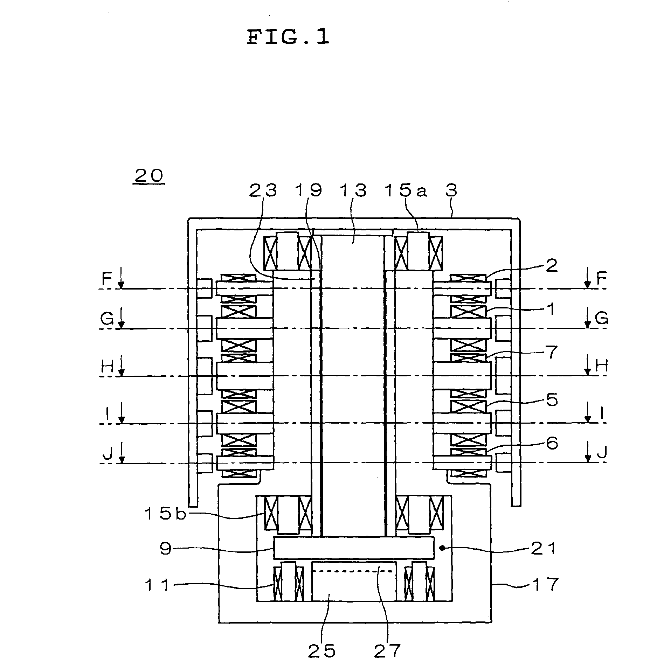

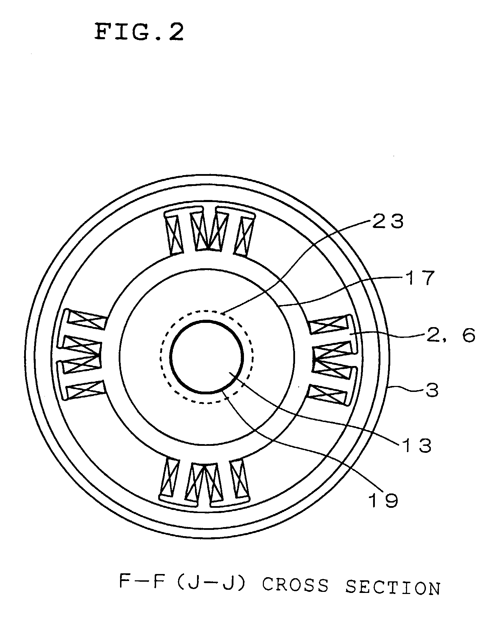

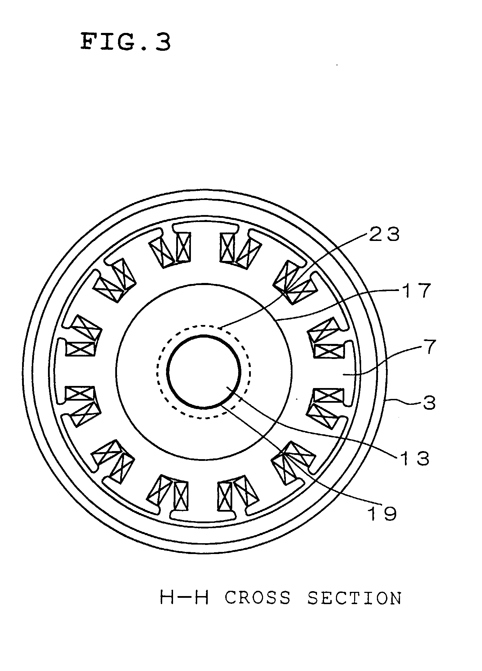

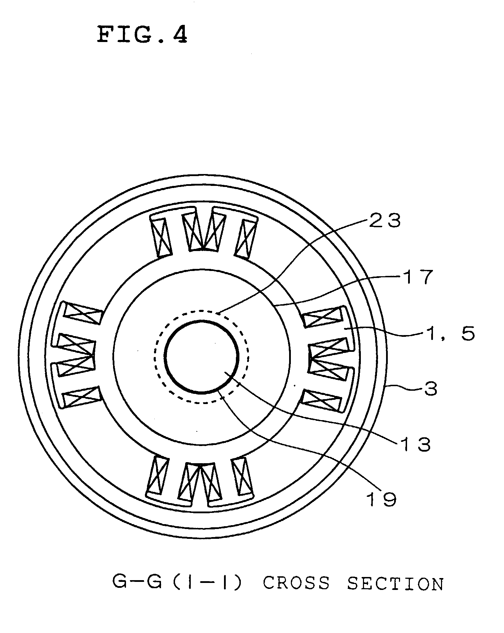

A preferred embodiment of the present invention will be described below with reference to the accompanying drawings. Figs. 1 through 4 show an embodiment of the present invention which is a magnetic bearing device 20 (of an outer rotor type) in which five axes control is performed. Components of this embodiment identical or corresponding to those shown in Figs. 5 through 8 are indicated by the same reference characters, and the description for them will not be repeated.

Referring to Figs. 1 through 4, a small clearance of several μm is provided between a shaft 13 and an inner surface of a stator 17 defining a hole 19. In the inner surface of the hole 19, grooves 23 having a depth of several μm are spirally formed to constitute a dynamic pressure bearing.

Dynamic pressure bearing grooves 23 may be formed through the entire inner surface of the hole 19 of the stator 17 along the shaft. Alternatively, grooves 23 may be formed, for example, only in portions of the inner surface of the hole 19 at axial positions corresponding to an upper radial electromagnet 1 and a lower radial electromagnet 5.

A projecting portion 25, which corresponds to the disk bottom surface facing means, is formed so as to extend upward from the bottom of a disk chamber 21. A small clearance of several μm is provided between the upper surface of the projecting portion 25 and the bottom surface of a disk 9. Grooves 27 having a depth of several μm are formed in the upper surface of the projecting portion 25 so as to extend spirally from a central point thereof.

The operation of the embodiment of the present invention will now be described.

As the shaft 13 rotates, dynamic pressure of air is produced between the shaft 13 and the inner surface of the hole 19 of the stator 17 by the grooves 23 formed in the inner surface of the hole 19. If the stiffness for position adjustment in the radial direction with the upper radial electromagnet 1 and the lower radial electromagnet 5 becomes lower in a frequency range (e.g., about a resonance point) in which the gain of transfer function G(s) decreases, the dynamic air pressure acts so as to compensate for deficiencies of the magnetic attractions of the upper and lower radial electromagnets 1 and 5.

Therefore, the shaft 13 can be supported with high stiffness in the radial direction.

Also, as the shaft 13 rotates, dynamic air pressure is produced between the bottom surface of the disk 9 and the upper surface of the projecting portion 25 by the grooves 27 formed in this surface.

If the stiffness for position adjustment in the axial direction with the axial electromagnets 15a and 15b becomes lower in a frequency range (e.g., about a resonance point) in which the gain of transfer function G(s) decreases, this dynamic air pressure acts to compensate for deficiencies of the magnetic attractions of the axial electromagnets 15a and 15b. A sufficiently large control force is thereby obtained. Therefore, the shaft 13 can be supported with high stiffness in the axial direction.

Consequently, when the outer rotor 3 rotates, it is supported in a non-contact manner with stability and high stiffness through the entire frequency range. Also, whirl of the outer rotor 3 is not increased, and the size of the electromagnets of the magnetic bearing can be reduced. Thus, the size and power consumption of the magnetic bearing device 20 can be reduced.

If the shaft 13 is supported only by the dynamic air pressure bearing without using the magnetic bearing, the outer rotor 3 falls or does not float suitably when, for example, the outer rotor 3 stops or starts rotating, thereby causing contact between the shaft 3 and the inner surface of the hole 19 of the stator 17, etc. In such a situation, the inner surface of the hole 19 may be scratched or scuffed and the grooves 23 and 27 may be damaged, resulting in deterioration of the slide bearing performance and failure to perform stable control of the outer rotor 3.

However, the magnetic bearing and the dynamic air pressure bearing are combined to enable the outer rotor 3 to be supported always stably in a non-contact manner by being floated by magnetic force even when it is in a stationary state, thus preventing touchdown at the time of starting, stopping, etc. The possibility of damage is thereby reduced.

In this embodiment, the magnetic bearing and the dynamic air pressure bearing mutually offset their shortcomings to enable stable control of the outer rotor 3.

In this embodiment, the bearing device is arranged so that dynamic air pressure works. However, the same arrangement is available in combination with dynamic pressure of any other fluid.

While the embodiment has been described with respect to the magnetic bearing device of a five axes control type, the number of control axes of the magnetic bearing is not particularly limited. Further, even in the case where the rotating member is of an inner rotor type, slide bearings may be discontinuously arranged in the axial direction out of the places for magnetic bearing portions to achieve the same effect.

According to the present invention, as described above, magnetic bearing means and dynamic fluid pressure generation means are provided, and the magnetic bearing means and dynamic fluid pressure generation means mutually offset their shortcomings to enable stable control of the rotating member. Therefore, the size of the electromagnets of the magnetic bearing can be reduced and the overall size and power consumption of the magnetic bearing device can be reduced.

**Claims**

1. A magnetic bearing device comprising:

   a rotating member;
   magnetic bearing means for supporting the rotating member by magnetic force, and for adjusting a radial position and/or an axial position of the rotating member;
   a stator on which the magnetic bearing means is fixed; and
   dynamic fluid pressure generation means for reinforcing the control force of the magnetic bearing in a compensating manner by dynamic fluid pressure produced in a small clearance formed between the stator and the rotating member as the rotating member rotates.

2. A magnetic bearing device according to claim 1, wherein the rotating member has an outer rotor and a shaft provided at a center of the outer rotor, and wherein

   the stator has a hole formed therein, the shaft being passed through the hole with a small clearance formed between the stator and the shaft in the hole, and the dynamic fluid pressure generation means has grooves for generating dynamic air pressure, the grooves being formed partially or entirely in an inner surface of the stator defining the hole and facing the shaft and/or in a cylindrical surface of the shaft.

3. A magnetic bearing device according to claim 1 or 2, wherein the rotating member has an outer rotor, a shaft provided at a center of the outer rotor, and a disk provided on a lower portion of the shaft, and wherein

   disk bottom surface facing means is provided in a bottom portion of the stator by being slightly spaced apart form the disk so as to face a bottom surface of the disk with a predetermined clearance formed therebetween, and the dynamic fluid pressure generation means has grooves for generating dynamic air pressure, the grooves being formed partially or entirely in an upper surface of the disk bottom surface facing means and/or in the bottom surface of the disk.

# FIG.1

FIG.2

F-F (J-J) CROSS SECTION

# FIG.3

H-H CROSS SECTION

FIG.4

23
17
1, 5
3
13
19

G—G (I—I) CROSS SECTION

# FIG.5

# PRIOR ART

# FIG.6

# PRIOR ART

17

2, 6

3

13

19

A—A (E—E) CROSS SECTION

# FIG.7

## PRIOR ART

17

7

3

13

19

C—C CROSS SECTION

# FIG.8

# PRIOR ART

B-B (D-D) CROSS SECTION